# EUROPEAN PATENT APPLICATION

(11) **EP 4 140 959 A1**
(43) Date of publication of application: **01.03.2023**
(21) Application number: 21193926.9
(22) Date of filing: 31.08.2021
(51) Int. Cl.: C02F 3/00, C02F 101/10, C02F 1/461, C02F 3/12, C02F 3/20, C02F 1/463

(54) **PHOSPHATE PRECIPITATION MODULE**

(71) Applicant: Europhat Sverige AB, 312 53 Hishult (SE)
(72) Inventor: Anderegg, Reto Robert, 312 53 Hishult (SE)
(74) Representative: Hansson Thyresson AB

(57) **Abstract**

A phosphate precipitation module (12) for precipitation of phosphate in wastewater is provided. The module (12) comprises at least a first (15a) and a second (15b) electrode; a power supply unit (17) configured to apply a DC voltage to said electrodes (15a, 15b) such that one electrode (15a, 15b) is a cathode, and the other electrode (15b, 15a) is an anode in order for an ion shift to occur for precipitation of phosphate; an oxygenation device (35) comprising a pump unit (24) connected to at least one nozzle (29) via at least one transfer tube (23). The pump unit (24) being configured to supply air to the wastewater via said transfer tube (23) and said nozzle (29) for oxygenating the wastewater.

## Description

### TECHNICAL FIELD

The present invention relates to a phosphate precipitation module and a method for precipitation of phosphate.

### BACKGROUND

Wastewater and sewage must be purified before being released into the nature. This is commonly made in a wastewater treatment plant, but houses and buildings not connected to a common sewerage must purify the wastewater in close connection to the house or building. This may for example be done in a septic tank, a three-chamber tank or similar.

One way of removing phosphate is by means of electrolysis, which is disclosed in e.g. EP 0 605 675 B1. However, existing phosphate removal systems of this kind are often adapted for larger plants. The systems are not adapted for installation in individual drains and sewages, e.g. septic tanks, which means that phosphate is not removed in such amounts to fulfill statutory requirements.

There is a need for effective phosphate removal also in smaller sewages, and without the need of adding chemicals.

From the above it is understood that there is room for improvements and the invention aims to solve or at least mitigate the above and other problems.

### SUMMARY

The invention is defined by the appended independent claims. Additional features and advantages of the concepts disclosed herein are set forth in the description which follows, and in part will be obvious from the description, or may be learned by practice of the described technologies. The features and advantages of the concepts may be realized and obtained by means of the instruments and combinations particularly pointed out in the appended claims. These and other features of the described technologies will become more fully apparent from the following description and appended claims or may be learned by the practice of the disclosed concepts as set forth herein.

In a first aspect, a phosphate precipitation module for precipitation of phosphate in wastewater is provided. The module comprises at least a first and a second electrode; a power supply unit configured to apply a DC voltage to said electrodes such that one electrode is a cathode, and the other electrode is an anode in order for an ion shift to occur for precipitation of phosphate. The phosphate precipitation module further comprises an oxygenation device comprising a pump unit connected to at least one nozzle via at least one transfer tube. The pump unit is configured to supply air to the wastewater via said transfer tube and said nozzle for oxygenating the wastewater. An advantage of this phosphate precipitation module is that the precipitation of phosphate is enhanced by means of the oxygenation device. Another advantage is that the phosphate precipitation module is able to precipitates phosphate to a satisfactory extent also in a non-aerated chamber of a sewage treatment system, due to the oxygenation device.

The phosphate precipitation module may further comprise a control unit operatively connected to the power supply unit. This is beneficial in that the operation of the phosphate precipitation module may be controlled.

In one embodiment, the control unit is configured to control the power supply unit such that the polarity of the DC voltage is periodically reversed. Since the control unit is configured to alternate the polarity between the electrodes, both electrodes function as cathode and anode alternatingly. This provides the phosphate precipitation module with a longer lifetime, since both electrodes are equally worn.

The control unit may be operatively connected to the pump unit of the oxygenation device, and the control unit may further be configured to control the pump unit to periodically supply air to the wastewater. When the pump unit is activated the phosphate precipitation process takes place. When the pump unit is deactivated, and no air/oxygen is supplied to the water, the precipitation sinks to the bottom of the chamber/tank. Thus, the efficiency of the phosphate precipitation, and thus the treatment of the sewage water is improved and enhanced.

In one embodiment, the electrodes are plate shaped, and the at least one nozzle is arranged between the electrodes.

Alternatively, the electrodes are tube shaped, and the at least one nozzle is arranged inside at least one of the electrodes. It is beneficial to arrange the at least one nozzle in close proximity to the electrodes, as the oxygen provided through the nozzle is used in the precipitation process taking place in the area of the electrodes.

In one embodiment, the pump unit is configured to supply air at a flow rate of 10-50 l/h, preferably 20-40 l/h and most preferred approximately 30 l/h. This is an efficient supply rate for enhancing the phosphate precipitation but not affecting the balance of the bacterial action in the chamber/tank where the module is intented to be arranged.

In a second aspect, a method for precipitation of phosphate from wastewater is provided. The method comprises the steps of arranging a phosphate precipitation module in the wastewater to be treated; applying a voltage to the electrodes; and supplying air to the wastewater by means of the oxygenation device. This method is beneficial in that phosphate precipitation is enhanced by means of the air supplied to the wastewater to be treated.

In one embodiment, the step of arranging the phosphate precipitation module further comprises arranging the module in a chamber of a water treatment system, which chamber does not comprise aeration means for aeration of the wastewater. It is especially advantageous to arrange the phosphate precipitation module in a non-aerated chamber of a water treatment system since the air supply of the module enhances the phosphate precipitation.

The step of arranging the phosphate precipitation module may further comprise arranging the module in a water treatment system of sequential batch reactor (SBR) type. Preferably, the phosphate precipitation module is arranged in a chamber of the SBR system not comprising aeration means for aeration of the wastewater. Thus, the precipitation of phosphor is improved due to the step of suppling air.

In one embodiment, the step of supplying air comprises supplying air at a flow rate of 10-50 l/h, more preferred 20-40 l/h, and most preferred approximately 30 l/h. This is an efficient supply rate for enhancing the phosphate precipitation but not affecting the balance of the bacterial action in the chamber where the module is arranged.

### BRIEF DESCRIPTION OF THE DRAWINGS

In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:
Fig. 1 is a schematic view of a treatment plant for purifying wastewater according to one embodiment;
Fig. 2 is a perspective side view with a broken-out section of a phosphate precipitation module according to one embodiment,
Fig. 3 is a perspective side view of a phosphate precipitation module according to one embodiment,
Fig. 4 is a schematic side view of a three-chamber septic tank provided with the phosphate precipitation module in Fig. 3;
Fig. 5 is a schematic top view of the three-chamber septic tank in Fig. 4;
Fig. 6 is a schematic side view of a two-chamber septic tank provided with the phosphate precipitation module in Fig. 3;
Fig. 7 is a schematic side view of a two-chamber septic tank and a separate tank for phosphate precipitation; and
Fig. 8 is a flowchart of a phosphate precipitation method.

Further, in the figures like reference characters designate like or corresponding parts throughout the several figures.

### DETAILED DESCRIPTION

Various embodiments of the disclosed methods and arrangements are discussed in detail below. While specific implementations are discussed, it should be understood that this is done for illustration purposes only. A person skilled in the relevant art will recognize that other components, configurations, and steps may be used without parting from the spirit and scope of the disclosure.

In the description and claims the word "comprise" and variations of the word, such as "comprising" and "comprises", does not exclude other elements or steps.

Hereinafter, certain embodiments will be described more fully with reference to the accompanying drawings. It will be apparent to those skilled in the art that various modifications and variations can be made without departing from the inventive concept. Other embodiments will be apparent to those skilled in the art from consideration of the specification and practice disclosed herein. The embodiments herein are provided by way of example so that this disclosure will be thorough and complete, and will fully convey the scope of the inventive concept, and that the claims be construed as encompassing all equivalents of the present inventive concept which are apparent to those skilled in the art to which the inventive concept pertains. If nothing else is stated, different embodiments may be combined with each other.

The inventive concept relates to a module for lowering the phosphorus content in wastewater in e.g. septic tanks, three-chamber tanks or tanks of SBR-type (sequential batch reactor).

By the technique presented herein, wastewater is subjected to electrolysis in one of the chambers of the treatment tanks by means of metal electrodes and an electrical direct voltage. When an electric field is built up in the wastewater, the electrode reactions and the ion migration lead to chemical changes which result in a surprisingly strong precipitation of phosphorus, with the phosphorus being enriched in the sewage sludge, which may be withdrawn from the tank during a cleaning cycle together with the excess sludge. The remaining portion of the phosphorus is preferably biodegraded in an aeration tank by microorganisms, so that a reduction of the phosphorus content in the wastewater to a desired extent can be ensured in an environmentally friendly manner without the addition of chemicals.

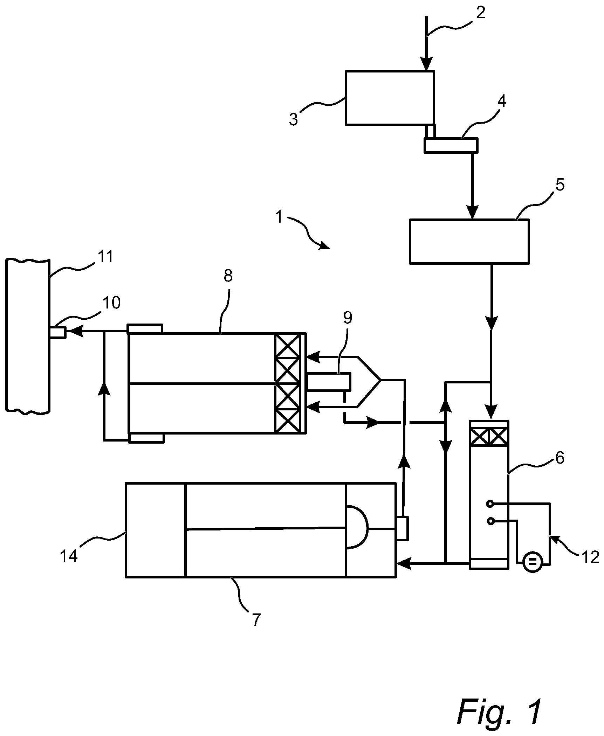

In Fig. 1, a wastewater treatment plant 1 is shown. The wastewater is subjected to a cleaning cycle, in which it is conducted via an inlet 2, a rain basin 3, an inlet screw pump 4, a rake and sand trap 5, a primary settling tank 6, an aeration tank 7 and a secondary settling tank 8. A return sludge screw pump 9 conveys the sludge from the secondary settling tank 8 back into the cleaning circuit, partially before and partially after the primary settling tank 6, and the treated water passes from the secondary settling tank 8 via an outlet 10 into a soak away or dry well 11. In the primary settling tank 6, an electrolysis phosphate precipitation module 12 connected to a direct current source 13 is immersed into the wastewater and allow the establishment of an electric field. The electrolysis phosphate precipitation module 12 will be described in more detail below.

The wastewater fed into the sewage treatment plant 1 reaches, after having passed the mechanical cleaning by means of the rake and sand trap 5, the primary settling tank 6, where a denitrification takes place and most of the suspended matter settles out. This primary sludge is taken, together with the excess sludge recycled from the secondary settling tank 8, to be further processed in thickeners and digesters which are not shown or further described herein.

In the primary settling tank 6, the wastewater is subjected to electrolysis by means of the electrolysis phosphate precipitation module 12. The electrolysis phosphate precipitation module 12 is connected to a direct voltage, which leads to an efficient and effective phosphorus precipitation.

The mechanically cleaned, denitrified and phosphorous precipitated wastewater flows from the primary settling tank 6 into the aeration tank 7 where the remaining portion of the phosphorus and organic substances still contained are further broken down by microorganisms, with aeration devices 14 ensuring the corresponding supply of oxygen. The sludge-water mixture flowing out of the aeration tank 7 is passed into the secondary settling tank 8, in which the residual sludge settles, and the now also biologically cleaned wastewater reaches the drywell 11 from the secondary settling tank 8 via outlet 10.

Approximately half of the sludge from the secondary settling tank 8 is fed back, via the return sludge screws 9, into the primary settling tank 6 and the other approximately half into the aeration tank 7, which closes the sludge cycle and achieves the desired degree of purification.

The electrolysis in the purification method only needs to be carried out in one stage. Despite one-step separation, a separation success of over 90% is achieved.

Oxygen is required in order for the chemical process of phosphorus precipitation to work. The oxygen is consumed during the precipitation of phosphate. During the nitrification phase of the treatment of the wastewater, ammonium is combined with oxygen under formation of nitrite (NH₄⁺+ O₂ gives NO₂⁻) which combined with oxygen results in nitrate (NO₂⁻ + O₂ gives NO₃⁻). The nitrate combines with calcium under formation of calcium nitrate (Ca²⁺ NO₃⁻). The phosphate is mainly retained by the bacteria/microorganisms in the treatment tank.

Thereafter follows a denitrification phase in which the calcium nitrate is first reduced to calcium nitrite (Ca²⁺ NO₃⁻ gives Ca²⁺ NO₂⁻ and O₂) and then to calcium ammonium (Ca²⁺ NH₄⁺ gives Ca²⁺ NH₄⁺ and O₂). After the reduction, the bacteria release most of the phosphate they have absorbed. As the released phosphate is negatively charged, and the calcium ammonium is positively charged, the two ions are combined (Ca²⁺ NH₄⁺ + PO₄³⁻ gives CaNH₄PO₄). Due to the same charge values, the same chemical process may alternatively take place with magnesium ions.

The remaining phosphate, which has not combined into calcium- or magnesium ammonium phosphate, is taken up again by the biomass in the subsequent nitrification and converted to salt in a subsequent cycle. This process results in a phosphate reduction of up to 98%.

Bacteria adhere to the formed calcium ammonium phosphate CaNH₄PO₄ (or MgNH₄PO₄), which results in an improved sludge index. An approximately 20% reduction of sludge is obtained by means of the chemical oxidation. The formed salts CaNH₄PO₄ and MgNH₄PO₄, respectively, are continuously removed from the sewage treatment plant together with the excess sludge.

Since oxygen is relevant for the precipitation of phosphate, the phosphate precipitation module 12 may be arranged in the aeration tank 7, or in a tank provided with aeration means, of the sewage treatment system. However, in some embodiments, it is desirable, or necessary to arrange the phosphate precipitation module 12 in another tank or chamber, for example in a first chamber of a septic tank or three-chamber tank. These tanks are not provided with aeration means, meaning that they do not have any oxygen supply. A reason for arranging the module 12 in a chamber without aeration means is due to the size of the aerated chamber. The aerated chamber may be too small to house the phosphate precipitation module 12, or the aeration means may take up so much space such that the precipitation module 12 does not fit. In this case it is advantageous to provide oxygen to the water in close proximity to the phosphate precipitation module 12, such that the phosphate precipitation is carried out to a sufficient degree.

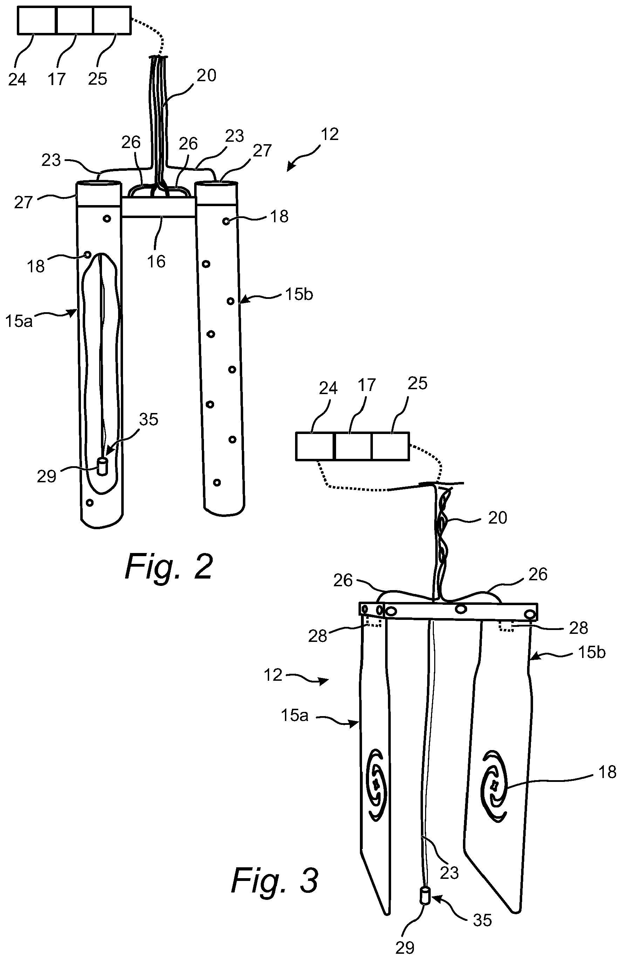

With reference to Figs 2-3, the electrolysis phosphate precipitation module 12 will be more thoroughly described. In a first embodiment, shown in Fig. 2, the precipitation module 12 comprises a first 15a and a second 15b hollow tube, connected to each other by means of a bar 16. The bar 16 is made of polyethylene, but in other embodiments, the bar 16 could be made of any non-conductive material.

The tubes 15a, 15b are in this embodiment made of metal, preferably of iron. However, other materials may be used as well. For example, titanium, industrial diamond, or stainless steel may be used. Iron is preferred for smaller modules, adapted for individual drains, due to its lower cost. Industrial diamonds are preferred in larger modules, adapted for municipal installations, due to its long durability. Aluminum may also be used, however with care, due to its environmental impact.

Each hollow tube 15a, 15b is provided with openings 18, the advantage of which will be further described below. The module 12 further comprises a CPU or control unit 25 and an electric power supply unit 17.

The electric power supply unit 17 is arranged to apply a DC voltage to the tubes 15a, 15b. The electrical power supply unit 17 is connected to the tubes 15a, 15b by means of electric power transfer means 26, which may be electrical wires or cables. The tubes 15a, 15b thus work as electrodes, and are referred to as such below. The CPU 25 is in operative connection with the electrical power supply unit 17.

The electrical power transfer means 26 are soldered onto the first 15a and second 15b tubes, respectively. The solder joint is performed in a water resistant manner. This is accomplished e.g. by arranging a shrink tube 27 as a cuff on an upper portion of each tube 15a, 15b. The electrical power transfer means 26 are connected to the respective tube 15a, 15b within the shrink tube 27 cuff. Thus, the connection is protected from water. This arrangement provides a water resistant connection. In one embodiment, the height of the shrink tube 27 cuff is approximately 5 cm.

The voltage applied is preferably in the range of 22-26V, with a current of 1.0-160A, depending on the amount of water to be treated. The DC voltage is supplied such that one of the tubes 15a is a cathode, and the other tube 15b is an anode.

The module 12 further comprises an oxygenation device 35. The oxygenation device comprises a pump unit 24, at least one transfer tube 23 and at least one orifice or nozzle 29. The pump unit 24 is preferably arranged in connection with the control unit 25 and the power supply unit 17 in a control box (not shown). The pump unit 24 is in operative connection with the control unit 25. The pump unit 24 is connected to the at least one, in this embodiment preferably two, transfer tubes 23, each of which is in turn connected to the nozzles 29. One nozzle 29 is provided inside each hollow electrode 15a, 15b, and each nozzle 29 is connected to the pump unit 24 by means of the tubes 23.

The pump unit 24 is configured to pump air through the tubes 23, via the nozzle 29 and into the wastewater to be treated by the precipitation module 12 in order to oxygenate the water. In this embodiment, the module 12 is configured to oxygenate the wastewater by means of the supplied air. In other embodiments, the module 12 may be configured to oxygenate the wastewater by means of compressed air, pure oxygen or any other suitable means. The supply of air, leading to oxygenation of the wastewater to be treated, results in an efficient precipitation of phosphate, also when the module 12 is arranged in a chamber without aeration means.

The pump unit 24 is configured to pump air at a flow rate of 10-50 l/h, more preferred 20-40 l/h and most preferred approximately 30 l/h. A conventional aeration means for a septic tank is configured to supply air at a flow rate of 100-120 I/min in order to provide oxygen to the bacteria in the tank. Thus, the relatively small amount of air supplied to the water by the pump unit 24 does not affect the environment of the chamber in which the module 12 is arranged. It does not disturb the balance of the bacterial action in the chamber where it is arranged.

It may be preferred not to supply air continuously. When the pump unit 24 is activated, meaning that the wastewater is being oxygenated, the phosphate precipitation process takes place. When the pump unit 24 is deactivated, and no air is supplied to the water, the precipitation sinks to the bottom of the chamber/tank.

Therefore, the control unit 25 may be configured to control the time during which air is supplied by the pump unit 24. The control unit 25 may control the pump unit 24 to alternate between an active mode and an idle mode. In the active mode, the pump unit 24 is configured to supply air to the water, and in the idle mode, the pump unit 24 is deactivated/turned off.

In one embodiment, the tank 19, 22 has a volume of approximately 4 m³. For a tank of this volume a suitable time period for the active mode and the passive mode, respectively, is 5 minutes.

In another embodiment, the tank 19, 22 has a volume of approximately 6 m³. For a tank of this volume a suitable time period for the active mode and the passive mode, respectively, is10 minutes.

The time period for the active and passive mode, respectively, depends not only on the volume of the tank 19, 22, but also on the number of households connected to the tank 19, 22 and the number of persons in the households.

In a conventional septic tank, no air/oxygen supply is required, since the process in this type of tank is dependent on anaerobic bacterial action only. In the case of a septic tank comprising an aerated chamber, the water to be treated by the phosphate precipitation module 12 is automatically aerated if the module 12 is arranged in the aerated chamber. However, a problem occurs if a phosphate precipitation module without an oxygenation device, e.g. for space reasons, is arranged in a non-aerated chamber of the septic tank, since there will not be enough oxygen for the precipitation process.

Therefore, it is beneficial to provide the module 12 with the oxygenation device 35. The oxygenation device 35 is also beneficial when the module 12 is arranged in an aerated tank, in that the oxygen is supplied adjacent, or near, the electrodes 15a, 15b where the precipitation process takes place.

The openings 18 provided in the electrodes 15a, 15b improve circulation of water and the combination of the openings 18 and the oxygenation device 35 results in an efficient precipitation of phosphate from the water to be treated.

Another embodiment of the phosphate precipitation module 12 is shown in Fig. 3. Only the features differing between the embodiments are described below.

In this embodiment, the module 12 comprises a first plate 15a and a second plate 15b. Each plate 15a, 15b is provided with one or more through openings 18. The plates 15a, 15b may be provided with any suitable number of openings, of any suitable shape. As in the previously described embodiment, the electrical power transfer means 26 are soldered onto each respective plate 15a, 15b. In order to accomplish a water resistant solder joint, each plate 15a, 15b is provided with a recess 28. The electric power transfer means 26 are soldered to the respective plates 15a, 15b within the respective recess 28. Thereafter, the recesses 28 are filled with a sealing compound comprising polyurethane. This provides a water resistant seal such that the soldering joint is not exposed to water.

The electrical power transfer means 26 are connected to the electric power supply unit 17 such that one of the plates 15a functions as cathode and the other plate 15b as anode.

The purification capacity of one module 12 is adapted for an individual household. In order to arrange for a larger volume of water to be purified, several modules 12 may be connected, or used together as an aggregate arrangement. This is useful e.g. if two households share a single sewage or septic tank. In this case, the modules 12, each comprising two electrodes 15a, 15b are connected in parallel with each other.

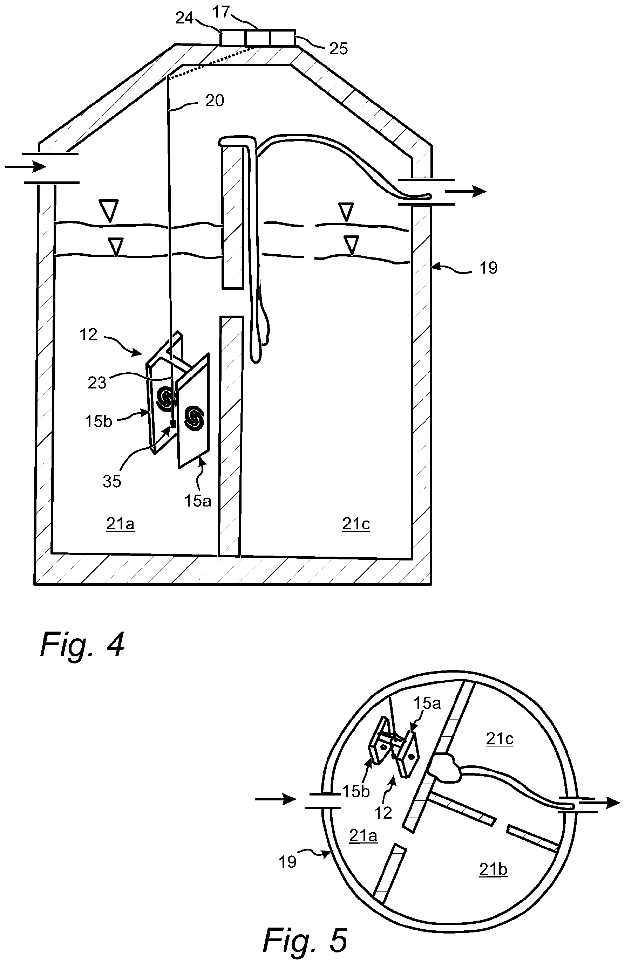

Figs 4-7 shows the module 12 installed in different types of water treatment tanks/systems. Figs 4-5 show a module 12 installed in a three-chamber septic tank 19, comprising a first 21a, a second 21b, and a third 21c chamber. The second chamber 21b is provided with aeration means (not shown). The septic tank 19 is conventional and will not be described in more detail herein. The phosphate precipitation module 12 is suspended in a suspension device 20, which may be a chain, a string, a wire, a rod or any other suitable suspension means, such that it is submerged in the wastewater to be treated. The module 12 is arranged in the first chamber 21a of the three-chamber septic tank 19, which chamber is not provided with aeration means. Instead, the aeration, and thereby oxygen, is provided to the water by the oxygenation device 35 of the phosphate precipitation module 12.

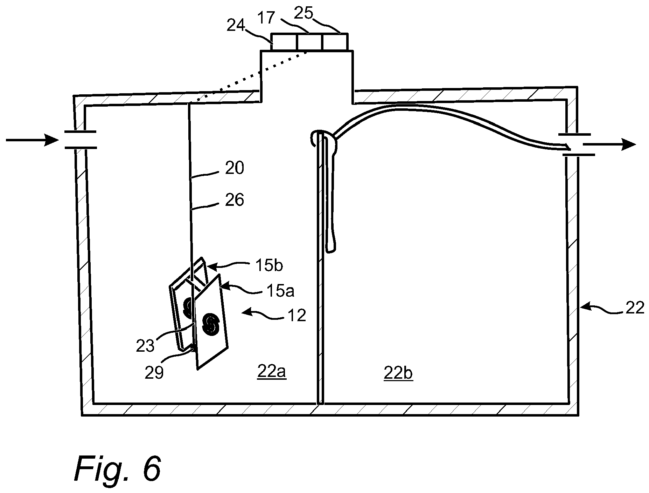

In Fig. 6, the module 12 is arranged in a two-chamber septic tank 22 comprising a first 22a and a second 22b chamber. The module 12 is arranged in the first chamber 22a, which is not provided with aeration means. Instead, the aeration, and thereby oxygen, is provided by to the water by means of the oxygenation device 35 of the phosphate precipitation module 12.

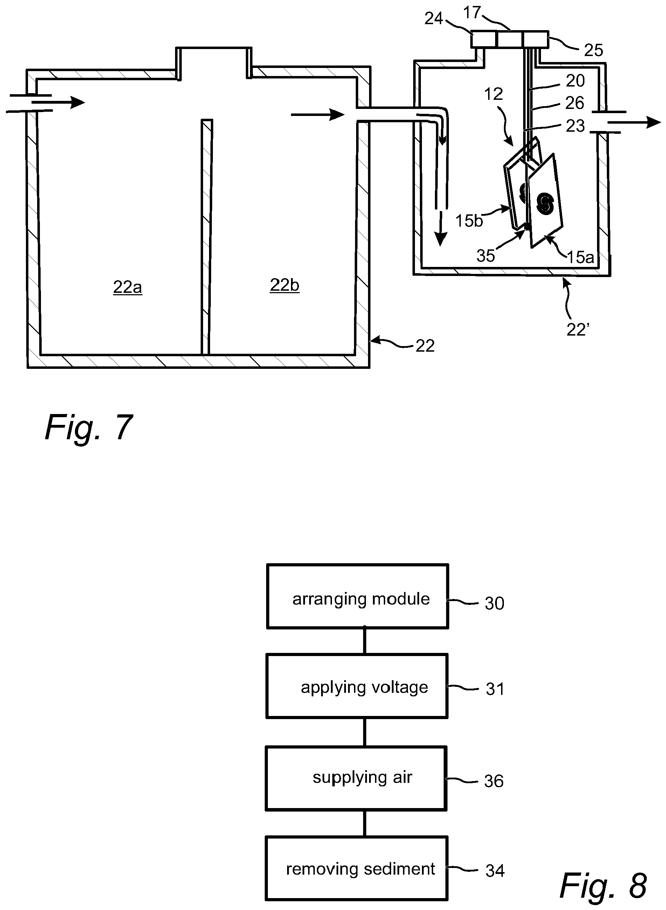

In Fig. 7, the phosphate precipitation module 12 is arranged in a treatment plant comprising a two-chamber septic tank 22, with a first 22a and a second 22b chamber, and a separate tank 22' for phosphate precipitation. The module 12 is arranged in the separate tank 22', which is not provided with aeration means. Instead, the aeration, and thereby oxygen, is provided to the water by means of the oxygenation device 35 of the phosphate precipitation module 12.

In Fig. 8, one embodiment of a method for removing phosphate from wastewater is shown. The phosphate precipitation module 12 is arranged 30 submerged in the water to be purified, including e.g. of phosphate. The DC voltage is applied 31 to the electrodes 15a, 15b which causes precipitation of phosphate from the water according to the above description. The openings 18 provided in the electrodes 15a, 15b improve the circulation of water and thus improves the precipitation of phosphate, since the water is more exposed to the electrolysis of the precipitation module 12. The pump unit 24 supplies 36 air, according to the above description, to the water to be treated such that it is oxygenated which promotes an improved precipitation of phosphate. The air supply also provides a possibility to arrange the module 12 in a chamber or tank not provided with separate aeration means.

In wastewater treatments arrangements of SBR-type (i.e. sequential batch reactor or sequencing batch reactor), the first chamber has no aeration means. It may be desirable in some applications to arrange the phosphate precipitation module 12 in this chamber anyway, e.g. due to space reasons as mentioned above, and by means of the oxygenation arrangement 35 the functionality of the module 12 is improved also in this application.

The control unit 25 is configured to shift or switch 32 the polarity of the applied DC voltage between the first 15a and second 15b electrode after a predetermined time period. Thus, both electrodes 15a, 15b work alternately as cathode and anode, and thus they are more equally worn. The lifetime of the module 12 is thus extended. The polarity change also prevents precious metals present in the water from attaching to the electrodes 15a, 15b. The precipitation efficiency of the module 12 is thus increased. The step of switching 32 the polarity is repeated 33 at predetermined time intervals. Suitable time intervals for changing the polarity between the electrodes 15a, 15b is every 6-8 hours, preferably every 2-3 hours, more preferably every 1.5 hours, and most preferred every 60 minutes. The more often the polarity is changed, the smaller amount of noble metals are accumulated on the negative electrode.

When enough phosphate is precipitated, the phosphate composition sedimented on the bottom of the tank is removed 34, together with excess sludge.

Tests have been performed on the electrolysis phosphate precipitation module 12 in order to determine the achieved precipitation. In a test system installation, the module 12 was submerged in water containing phosphate in an amount of 4.6-7.0 µg/l, in average the phosphate amount was 5.7 µg/l. The water purified in the test system turned out to contain in average 0.5 µg phosphate/liter of water after purification. This renders a phosphate removal of 89-93%. The recommendation for phosphate removal in individual sewages in Sweden is 70% for normal level of ground protection and 90% for high level of ground protection. The inventive module 12 is thus capable of fulfilling these recommendations.

The size of the electrodes 15a, 15b of the module 12 varies depending on the volume of water to be treated. As an example, the vertical height of the electrodes 15a, 15b is approximately 0.3-1 m, preferably approximately 0.5-0.8 m, and most preferred approximately 0.6 m. The horizontal length/diameter of the electrodes 15a, 15b is e.g. approximately 0.15-0.5 m, preferably approximately 0.2-0.3 m, and most preferred approximately 0.25 m.

In other embodiments, the module 12 may be used to purify water from other particles or substances as well. By changing the DC voltage, other substances may be captured. For example, noble metals may be accumulated on the negative electrode, which is exchanged after a certain amount of time.

The tanks 19, 22 referred to above may be of plastic or concrete, or any other suitable material.

In other embodiments, the module 12 may comprise two or more web or grid plates as electrodes, or any other suitable electrode shape.

It is possible to carry out the electrolysis with a current density of less than 0.05 A/dm² electrode surface at a voltage of approximately 22-26 V, preferably of approximately 24 volts. The module 12 therefore requires extremely small amounts of electrical energy.

In one embodiment, the bottom and/or the walls of the tank in which the module 12 is arranged is/are designed to be electrically conductive. In this embodiment, the bottom and/or the walls is/are used as cathode and only the anode is provided to be submerged in the water to be treated.

The various embodiments described above are provided by way of illustration only and should not be construed to limit the invention. Those skilled in the art will readily recognize various modifications and changes that may be made to the present invention without following the example embodiments and applications illustrated and described herein, and without departing from the scope of the present disclosure.

## Claims

1. A phosphate precipitation module (12) for precipitation of phosphate in wastewater, the module (12) comprising:
at least a first (15a) and a second (15b) electrode;
a power supply unit (17) configured to apply a DC voltage to said electrodes (15a, 15b) such that one electrode (15a, 15b) is a cathode, and the other electrode (15b, 15a) is an anode in order for an ion shift to occur for precipitation of phosphate;
an oxygenation device (35) comprising a pump unit (24) connected to at least one nozzle (29) via at least one transfer tube (23), wherein the pump unit (24) is configured to supply air to the wastewater via said transfer tube (23) and said nozzle (29) for oxygenating the wastewater.

2. The module according to claim 1, further comprising a control unit (25) operatively connected to the power supply unit (17).

3. The module according to claim 2, wherein the control unit (25) is configured to control the power supply unit (17) such that the polarity of the DC voltage is periodically reversed.

4. The module according to claim 2 or 3, wherein the control unit (25) is operatively connected to the pump unit (24) of the oxygenation device (35), and wherein the control unit (25) is further configured to control the pump unit (24) to periodically supply air to the wastewater.

5. The module according to any one of the preceding claims, wherein the electrodes (15a, 15b) are plate shaped, and wherein the at least one nozzle (29) is arranged between the electrodes (15a, 15b), or wherein the electrodes (15a, 15b) are tube shaped, wherein the at least one nozzle (29) is arranged inside at least one of the electrodes (15a, 15b).

6. The module according to any one of the preceding claims, wherein the pump unit (24) is configured to supply air at a flow rate of 10-50 l/h, preferably 20-40 l/h and most preferred approximately 30 l/h.

7. A method for precipitation of phosphate from wastewater comprising the steps of:
- arranging (30) a phosphate precipitation module (12) according to any one of the preceding claims in the wastewater to be treated;
- applying (31) a voltage to the electrodes (15a, 15b);
- supplying air (36) to the wastewater by means of the oxygenation device (35).

8. The method according to claim 7, wherein the step of arranging (30) the phosphate precipitation module (12) further comprises arranging the module (12) in a chamber of a water treatment system, the chamber not having aeration means for aeration of the wastewater.

9. The method according to claim 7 or 8, wherein the step of arranging (30) the phosphate precipitation module (12) further comprises arranging the module (12) in a water treatment system of sequential batch reactor (SBR) type, preferably arranging the phosphate precipitation module (12) in a chamber of the SBR system not having aeration means for aeration of the wastewater.

10. The method according to any one of claims 7-9, wherein the step of supplying air comprises supplying air at a flow rate of 10-50 l/h, more preferred 20-40 l/h, and most preferred approximately 30 l/h.
